(19) Europäisches Patentamt
European Patent Office
Office européen des brevets

(11) EP 0 698 617 B1

(12) **FASCICULE DE BREVET EUROPEEN**

(45) Date de publication et mention de la délivrance du brevet:
**19.08.1998 Bulletin 1998/34**

(51) Int Cl.[6]: **C08F 4/48**, C08F 297/02, C08L 53/02, C08L 53/00, C09J 153/00

(21) Numéro de dépôt: **95401481.7**

(22) Date de dépôt: **22.06.1995**

(54) **Amorceur multifonctionnel pour l'obtention de polymères en étoile par voie anionique, son procédé de fabrication, et polymères en étoile correspondants, leur procédé de fabrication et leurs applications**

Multifunktionelles Initiator für die Herstellung von anionischen sternförmigen Polymeren, Verfahren zu deren Herstellung und entsprechende sternförmige Polymere, Verfahren zu deren Herstellung und deren Verwendung

Multifunctional initiator for obtaining anionically star polymers process for its production and corresponding star polymers, process for their production and their use

(84) Etats contractants désignés:
**BE DE ES FR GB IT NL**

(30) Priorité: **25.08.1994 FR 9410287**

(43) Date de publication de la demande:
**28.02.1996 Bulletin 1996/09**

(73) Titulaire: **ELF ATOCHEM S.A.**
**92800 Puteaux, Hauts de Seine (FR)**

(72) Inventeurs:
- **Lutz, Pierre**
  **F-67800 Bischeim (FR)**
- **Rempp, Paul**
  **F-67100 Strasbourg (FR)**
- **Rein, David**
  **Providence, RI 02906 (US)**
- **Heim, Philippe**
  **F-64000 Pau (FR)**
- **Nicol, Pascal**
  **F-64000 Pau (FR)**
- **Vuillemin, Bruno**
  **F-64000 Pau (FR)**

(74) Mandataire: **Luziau, Nelly**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**EP-A- 0 288 761** **US-A- 4 678 837**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention porte sur un nouvel amorceur multifonctionnel, soluble en milieu apolaire, et conduisant à la synthèse, par voie anionique, de polymères en étoile bien définis, notamment de polymères en étoile comportant des bras de première génération, formés de séquences polymères vinylaromatiques ou diéniques, et des bras de seconde génération, formés de séquences polymères vinylaromatiques ou diéniques ou bien de deux blocs homopolymères, l'un relié au nodule, étant de type diénique ou vinylaromatique, et l'autre, relié au précédent et différent de celui-ci étant de type vinylaromatique ou (méth)acrylique ou vihylpyridine, les groupes terminaux ou les séquences terminales pouvant aussi être des groupes de fonctionnalisation.

On obtient ainsi des copolymères en étoile à branches élastomères et thermoplastiques, des séquences élastomères et thermoplastiques pouvant par ailleurs exister sur un même bras. De tels copolymères ont une bonne tenue à la chaleur, ils sont utiles comme adhésifs sensibles à la pression et comme agents améliorant la résistance au choc et la tenue thermique des polymères. A titre d'exemples de ces copolymères, on peut citer ceux à séquences de poly-1,4-cisbutadiène ou de polyisoprène, qui sont de bons élastomères, et à séquences terminales poly(méth)acryliques. De tels copolymères ne peuvent généralement pas être obtenus par voie séquentielle ; en effet, une séquence vivante de poly(méthacrylate de méthyle) ne peut amorcer une séquence de polybutadiène.

L'invention porte également sur le procédé de fabrication des amorceurs multifonctionnels précités, ainsi que sur les polymères en étoile qu'ils permettent d'obtenir et sur la fabrication de ces derniers et leurs applications.

Concernant la synthèse anionique de macromolécules en étoile, trois méthodes ont jusqu'ici été mises au point, lesquelles possèdent chacune des avantages et des inconvénients spécifiques :

(A) Dans la méthode "arm-first", on prépare un polymère précurseur vivant (polystyrène, polydiène) et on s'en sert pour amorcer la polymérisation d'une petite quantité d'un monomère bisinsaturé, notamment le divinylbenzène. De petits nodules de polydivinylbenzène se forment alors, entourés et protégés par les chaînes de précurseur qui ont contribué à leur amorçage. Cette méthode conduit à des macromolécules en étoile bien définies, de polymolécularité modérée, mais elle interdit la fonctionnalisation des branches à leur extrémité extérieure. Elle est réalisable en milieu polaire (tétrahydrofuranne) ou apolaire (benzène, cyclohexane) et peut donc s'appliquer aux polydiènes pour lesquels le contrôle de la microstructure 1-4 cis/trans implique l'utilisation d'un milieu apolaire.

Bien que cette méthode soit connue et appliquée depuis longtemps, il restait, entre autres, à préciser la cinétique de formation des étoiles et la proportion de doubles liaisons résiduelles (non affectées par la polymérisation) dans les nodules de polydivinylbenzène. Les présents inventeurs ont conduit des expériences qui ont permis de mettre en évidence la constitution progressive et non pas immédiate des nodules et de suivre l'évolution de leur fonctionnalité et la présence d'insaturations résiduelles dans ces nodules, notamment dans le cas du système styrène-divinylbenzène en milieu benzène ou cyclohexane.

Une autre série d'expériences a porté sur la formation "arm-first" d'étoiles de polybutadiène ou de polyisoprène. L'amorçage de la polymérisation du divinylbenzène par les sites butadiényle ou isoprényle est lent, ce qui a deux conséquences importantes : d'une part, il reste une proportion élevée de polybutadiène ou de polyisoprène linéaire, même après des temps de réaction longs et, d'autre part, les nodules sont très grands et de fonctionnalité élevée. Il résulte de cette étude que la méthode "arm-first" se prête mal à la synthèse d'étoiles de polydiène exemptes d'homopolymère résiduel.

(B) La méthode "core-first" consiste à préparer un amorceur organométallique multifonctionnel et à utiliser celui-ci pour l'amorçage d'un monomère (styrène, diènes, vinylpyridine, esters (méth)acryliques, dont la polymérisation constituera les branches. La difficulté réside dans l'obtention de solutions homogènes de nodules multifonctionnels. On procède par polymérisation anionique de divinylbenzène à grande dilution, le rapport molaire divinylbenzène/amorceur étant choisi entre des limites étroites. L'inconvénient de cette méthode est la très forte polymolécularité en masse et en fonctionnalité de ces échantillons de polymère en étoile ; son avantage est de permettre la fonctionnalisation des branches à leur extrémité, ainsi que la synthèse d'étoiles à branches séquencées.

Alors que la méthode "core-first" donne des résultats satisfaisants avec le styrène en milieu polaire, il a pu être montré, par les présents inventeurs, lors d'essais préliminaires effectués sur l'isoprène, que cette méthode est difficile à mettre en oeuvre avec les diènes en milieu apolaire, et cela pour deux raisons :

- les associations physiques entre sites actifs, en milieu apolaire, conduisent à la prise en masse du milieu réactionnel à un stade précoce de la polymérisation, rendant quasi-impossible l'agitation en milieu ;
- si les nodules amorceurs contiennent des doubles liaisons résiduelles (ce qui est démontré par les résultats relatés plus haut), des pontages chimiques peuvent également se former, conduisant alors à la formation d'un réseau polymère.

(C) La méthode de synthèse de macromolécules en "double étoile" procède en trois étapes (méthode "in-out").

On tire profit du fait que, lors de la synthèse "arm-first", chaque nodule contient un nombre de sites organo-métalliques égal au nombre de branches qui l'entourent. Ces sites peuvent ensuite servir à l'amorçage de la polymérisation d'un second monomère, ce qui conduit à la formation d'une deuxième génération de branches.

Les branches de seconde génération ainsi formées portent un site actif terminal et peuvent donc être fonctionnalisées en bout de chaîne. Leur longueur moyenne est donnée par le rapport molaire monomère/sites actifs, et leur nombre est sensiblement égal à celui des branches de première génération. Ces dernières sont de préférence choisies courtes de façon à ce que les branches de seconde génération constituent l'essentiel du matériau polymère.

Cette méthode a été appliquée avec succès à la synthèse de doubles étoiles de polystyrène-polyoxyéthylène, de polystyrène-poly(méthacrylate de méthyle), de polystyrène-poly(acrylate de tert.-butyle) et de polystyrène-polyvinylpyridine, les branches de polystyrène de la première génération étant le plus souvent de faible masse, si elles sont exclusivement destinées à assurer la protection des nodules ("cores") de polydivinylbenzène qui renferment les sites actifs (amorceurs polyfonctionnels).

Les insaturations qui pourraient subsister au sein des nodules des étoiles "primaires" de polystyrène ne sont pas gênantes pour la synthèse des doubles étoiles qui viennent d'être citées. En revanche, si les branches de seconde génération résultent de la polymérisation de monomères faiblement électrophiles, ces doubles liaisons sont responsables de la formation de pontages intermoléculaires. Tel est le cas du styrène, et, de façon générale, des monomères vinylaromatiques, et des diènes. Divers essais de synthèse, par la méthode "in-out", de doubles étoiles dont les branches de seconde génération sont de polystyrène, de polyisoprène ou de polybutadiène, se sont soldés parr autant d'échecs en raison de la réticulation chimique qui se manifeste par la prise en masse irréversible du milieu réactionnel. Ces pontages sont imputables à la réaction d'un site actif en croissance, situé à l'extrémité d'une branche, avec une double liaison résiduelle appartenant au nodule d'une autre molécule.

Il s'est donc avéré intéressant de rechercher des procédés pour former des étoiles doubles dont les branches de seconde génération comprendraient des séquences de polymère vinylaromatique et/ou de polydiène.

Les présents inventeurs se sont penchés sur les problèmes liés à l'insolubilité des amorceurs multifonctionnels en milieu apolaire et à la réticulation chimique qui peut se produire lorsque l'on utilise un nodule réticulé vivant comme amorceur multifonctionnel. Ils ont étudié d'abord la cinétique de formation des étoiles "primaires" de polystyrène en milieu apolaire et se sont attachés à mesurer la proportion de doubles liaisons résiduelles dans les nodules, en fonction du temps de réaction. La présence d'insaturations résiduelles a été confirmée, même après des temps de réaction très longs, correspondant à la valeur finale de la masse moléculaire de l'étoile primaire.

La présente invention a donc d'abord pour objet un amorceur multifonctionnel de polymérisation anionique, sous forme de polymère en étoile, soluble en milieu apolaire, ne comportant plus ou pratiquement plus de doubles liaisons résiduelles, représenté par la formule générale (I) :

$$(PA)_a N^{n-}\ nM^+ \qquad (I)$$

dans laquelle :

- PA représente une séquence polymère issue d'au moins un monomère A choisi parmi les monomères vinylaromatiques ou diéniques ;
- a représente le nombre de branches de la séquence PA, compris entre 3 et 15 ;
- N représente un nodule réticulé ne comportant plus ou pratiquement plus de doubles liaisons résiduelles ayant la formule :

$$(PMr)(RLi)_p$$

dans laquelle :

- Mr est un monomère comprenant au moins deux doubles liaisons polymérisables par molécule ;
- PMr est un nodule réticulé d'au moins un monomère Mr polymérisé et contenant 3 à 30 % de doubles liaisons résiduelles par rapport aux doubles liaisons initiales provenant du monomère Mr;
- R est un radical alkyle à chaîne linéaire ou ramifiée, contenant 1 à 6 atomes de carbone, un radical aryle à un ou plusieurs cycle(s) éventuellement substitué(s), un radical arylalkyle ou alkylaryle dans lequel le groupe alkyle a de 1 à 6 atomes de carbone, un radical cycloalkyle et un radical alcényle en $C_2$-$C_6$ substitué par un groupe aryle ou alkylaryle ;
- p est le nombre de doubles liaisons résiduelles de PMr neutralisées par RLi ;

- n est le nombre total de sites anioniques contenus dans le nodule réticulé N ; n est égal à a + p (ou à p), p ayant la signification précédente et a étant le nombre de sites anioniques contenu dans le nodule réticulé PMr correspondant au nombre de branches de séquence PA et M est un métal alcalin ou alcalino-terreux, de préférence le lithium.

En fonction de la signification de n, l'amorceur multifonctionnel peut avoir la formule (Ia) ou (Ib) :

$$(PA)_a\left[PMr\,(RLi)_p\right]^{(a+p)^-},\ (a+p)M^+ \qquad \text{(Ia)}$$

$$(PA)_a\left[PMr(RLi)_p\right]^{p^-},\ pM^+ \qquad \text{(Ib)}$$

Le monomère "vinylaromatique", tel qu'utilisé dans la présente description, signifie un monomère aromatique à insaturation éthylénique. Des exemples sont le styrène, le vinyltoluène, l'alphaméthylstyrène, le 4-méthyl-styrène, le 3-méthyl-styrène, le 4-méthoxy-styrène, le 4-éthyl-styrène, le 4-étoxy-styrène, le 3,4-diméthyl-styrène, le 3-tert.-butyl-styrène, le 1-vinyl-naphtalène, le 2-vinyl-naphtalène. Le monomère préféré est le styrène.

L'expression "monomère diénique", telle qu'employée dans la présente description, désigne un diène choisi parmi les diènes conjugués linéaires ou cycliques, contenant de 1 à 20 atomes de carbone. Des exemples non limitatifs comprennent le butadiène, l'isoprène, le 1,3-pentadiène, le cyclopentadiène, le piperylène, le phénylbutadiène. Les monomères préférés sont le butadiène et l'isoprène.

Quant au monomère multiinsaturé Mr, il peut être notamment choisi parmi les polyvinylbenzènes, tels que le divinylbenzène ou le trivinylbenzène et les diisopropénylbenzènes. Un monomère Mr préféré est le divinylbenzène.

RLi peut être le sec-butyllithium, le n-butyllithium et l'alphaméthylstyryllithium , le 1,1-diphénylhexyllithium, le diphénylméthyl-lithium et le 1,1-diphényl-3-méthylpentyllithium.

La masse moléculaire moyenne en poids d'une branche PA est d'environ 500 à 200000 ou plus, de préférence d'environ 1000 à 10000. La masse moléculaire moyenne en nombre de l'amorceur multifonctionnel de formule (I) est notamment d'environ 2500 à 500 000 ou plus, en particulier d'environ 5000 à 10 000.

L'amorceur multifonctionnel se présente notamment à l'état dissous en milieu apolaire. Comme solvant apolaire, on cite notamment le toluène, le benzène et l'éthylbenzène. Il est possible également d'utiliser un mélange de ces solvants. Ces solvants peuvent être employés purs ou aussi être associés à du cyclohexane, de l'hexane, de l'heptane, ces derniers étant employés, de préférence, en quantités mineures.

La présente invention a également pour objet un procédé de préparation de l'amorceur multifonctionnel tel que défini ci-dessus. Ce procédé est caractérisé par le fait que :

**(A) dans une première étape,** on conduit une polymérisation anionique d'au moins un monomère A, en milieu apolaire, à l'aide d'un système d'amorçage constitué par:

a) au moins un amorceur monofonctionnel de formule (II) :

$$R^1 - M \qquad \text{(II)}$$

dans laquelle :

- M désigne un métal alcalin ou alcalino-terreux ; et
- $R^1$ désigne un radical alkyle à chaîne linéaire ou ramifiée contenant 1 à 6 atomes de carbone, un radical aryle à un ou plusieurs cycle(s), éventuellement substitué(s), un radical arylalkyle ou alkylaryle dans lequel le groupe alkyle a de 1 à 6 atomes de carbone, un radical cycloalkyle et un radical alcényle en $C_2$-$C_6$ substitué par un groupe aryle ou alkylaryle ;

b) le cas échéant, au moins un ligand choisi parmi les sels minéraux de métaux alcalins, les complexants macrocycliques non azotés, et les composés organiques de métaux alcalins dans lesquels le métal alcalin est associé à un groupe de formule $B(R^2)_4$ où $R^2$ est choisi parmi l'atome d'hydrogène et les radicaux alkyle et aryle,

ce qui permet d'obtenir un site actif vivant à l'extrémité de chaque séquence polymère $PA^-$ ;

**(B) dans une seconde étape,** on fait réagir les séquences vivantes $PA^-$, dans le milieu qui a servi à conduire sa polymérisation par voie anionique, avec au moins un monomère Mr en rapport molaire de 2,5 - 15 par centre actif, pour former un nodule réticulé PMr contenant 3 à 30% de doubles liaisons résiduelles par rapport aux doubles liaisons initiales provenant du monomère Mr, ce qui permet d'obtenir un polymère vivant en étoile de la formule (III) :

$$(PA)_a(PMr)^{a-}, aM^+ \qquad (III)$$

**(C) dans une troisième étape,** ou bien

(C1) on fait réagir le polymère en étoile précurseur de formule (III) : $(PA)_a(PMr)^{a-}$, $aM^+$ avec une quantité d'un composé de la formule RLi telle que définie précédemment, capable de consommer les doubles liaisons résiduelles du nodule dudit polymère vivant (III), ce qui permet d'obtenir l'amorceur multifonctionnel attendu de formule (Ia) :

$$(PA)_a\left[PMr(RLi)_p\right]^{(a+p)^-},(a+p)M^+ \qquad (Ia)$$

ou bien
(C2) on désactive les sites actifs du polymère en étoile de formule (III) : $(PA)_a(PMr)^{a-}$, $aM^+$ par une réaction avec une source de protons consistant notamment en un alcool, de l'eau ou un acide protonique, ce qui, après séparation, permet d'obtenir le polymère en étoile précurseur à l'état désactivé de formule (IV) :

$$(PA)_a(PMr) \qquad (IV)$$

et

**(D) dans une quatrième étape,** conduite dans le cas où l'opération (C2) a été effectuée à la troisième étape, on réactive le polymère précurseur désactivé de formule (IV) : $(PA)_a(PMr)$ par réaction avec RLi tel que défini cidessus, de façon à reformer des sites actifs aux dépens des doubles liaisons résiduelles du nodule dudit polymère (IV) : $(PA)_a(PMr)$, ce qui permet d'obtenir l'amorceur multifonctionnel attendu

$$(PA)_a\left[PMr(RLi)_p\right]^{p^-},pM^+.$$

Les agents amorceurs monofonctionnels de formule (II) utilisés à la première étape sont, par exemple, le sec.-butyllithium, le n-butyllithium et l'alphaméthylstyryllithium, le 1,1-diphénylhexyllithium, le diphénylméthyl-lithium, et le 1,1-diphényl-3-méthylpentyllithium. En particulier, on choisit, comme l'amorceur (II), le sec.-butyllithium, le n-butyllithium et l'alphaméthylstyryllithium.

Le ligand peut d'abord être choisi parmi les sels minéraux de métaux alcalins ou alcalino-terreux, par exemple, les chlorures, fluorures, bromures, iodures, borures, sulfates, nitrates et borates.

Le ligand peut être également constitué par un agent complexant macrocyclique non azoté, choisi notamment parmi les polyéthers cycliques (encore dénommés éthers-couronne) tels que des polyéthers macrocycliques dont l'anneau macrocyclique contient au moins 14 atomes de carbone et d'oxygène, chaque atome d'oxygène de l'anneau étant séparé des autres atomes d'oxygène de l'anneau par deux atomes de carbone : de tels polyéthers macrocycliques ont déjà été décrits dans les brevets américains n° 3 687 978 et n° 4 826 941.

Le ligand peut également être un alcoolate de métal alcalin de formule $R^3(OR^4)_mOM_a$ ou $M_a(OR^4)_mOM_a$, où :

- $M_a$ représente un métal alcalin ;
- $R^3$ est un radical alkyle, linéaire ou ramifié, ayant de 1 à 6 atomes de carbone ou un radical arylalkyle dans lequel le reste alkyle est en $C_1$-$C_6$, ou un radical alkylaryle dans lequel le groupe alkyle a de 1 à 6 atomes de carbone ;
- $R^4$ est un radical allkylène, linéaire ou ramifié, ayant de 2 à 4 atomes de carbone ;
- m vaut 0 ou est le nombre entier 1, 2 ou 3.

Comme exemples de ces alcoolates de métaux alcalins, on peut citer les alcoolates de formules ci-dessus dans lesquelles :

- $R^3$ représente méthyle, éthyle, butyle et benzyle ;
- $R^4$ représente éthylène, (propylène, butylène et isopropylène) ; et
- $M_a$ est le lithium, le sodium ou le potassium.

Le ligand peut aussi être un composé organique d'un métal alcalin dans lequel ce dernier est associé à un groupe $B(R^2)_4$ comme le groupe borohydrure et le groupe tétraphénylborure.

Dans le procédé ci-dessus selon l'invention, à l'étape (A), la proportion de ligand utilisé peut varier fortement par rapport à l'amorceur $R^1$-M. Cette quantité peut être, par exemple, largement excédentaire par rapport à la quantité molaire d'agent amorceur. Cette quantité peut aussi être égale ou inférieure à la quantité molaire d'agent amorceur.

Le ligand est introduit dans une proportion molaire vis-à-vis de l'amorceur au moins égale à 0 et allant jusqu'à 50 environ, de préférence de 1 à 10.

Par ailleurs, conformément à ce procédé, à l'étape (C1) ou (D), on fait notamment réagir le composé RLi à raison d'environ 0,7 à 2 équivalents par rapport aux doubles liaisons résiduelles. Il convient de bien évaluer la quantité de composé RLi à ajouter. Si celle-ci est insuffisante, des pontages chimiques sont encore à craindre ; dans le cas contraire, l'excès de composé RLi conduira ultérieurement, lors de la synthèse des étoiles doubles, à la formation d'homopolymère linéaire, à côté des étoiles doubles visées.

Le procédé ci-dessus est par ailleurs conduit à une température généralement comprise entre 20 et 100°C.

Selon l'invention, on a mis au point une méthode destinée à éliminer ces insaturations, sans affecter les étoiles elles-mêmes, ni les sites actifs qu'elles contiennent. En effet, l'addition de composés de type RLi, par exemple le sec.-butyllithium, à la solution d'étoiles vivantes de polymère vinylaromatique (polystyrène) ou diénique permet de réduire, dans de fortes proportions, le nombre d'insaturations résiduelles dans les nodules, sans pour autant entraîner de pontages. La synthèse d'étoiles doubles dont les branches de seconde génération seraient constituées de polymère vinylaromatique ou de polydiène est ainsi rendue possible.

La solution apportée selon l'invention consiste à utiliser un polymère vinylaromatique ou diénique, généralement de faible masse moléculaire, en vue de la formation du nodule réticulé, ce qui permet à l'amorceur de demeurer soluble en milieu apolaire et évite les pontages entre nodules, pontages dus à l'attaque des doubles liaisons résiduelles du nodule par des sites anioniques en croissance. L'addition d'un composé RLi, après la formation du nodule, conduit à consommer les doubles liaisons résiduelles.

Pour tester l'efficacité de cette méthode de saturation des doubles liaisons résiduelles par un composé RLi, les présents inventeurs ont réalisé des expériences "in-out" destinées à la synthèse de molécules "en étoile double", dans lesquelles les branches de seconde génération sont respectivement de polystyrène, de polyisoprène, et de polybutadiène. Dans tous les cas, la réticulation chimique - entraînant une gélification irréversible- a pu être évitée ; l'efficacité du processus est démontrée par la comparaison de la masse moléculaire des étoiles formées avec celle des étoiles de polystyrène qui avaient servi d'amorceurs multifonctionnels. Ces résultats témoignent de l'absence de tout couplage intermoléculaire.

La présente invention a également pour objet un polymère en étoile représenté par la formule (V) :

$$[PA]_a N[PB-PC^-]_r, rM^+ \qquad (V)$$

ou la formule (Va) :

$$[PA]_a N[PB\text{-}PC]_r \qquad (Va)$$

selon qu'il est respectivement à l'état vivant ou à l'état désactivé, formules dans lesquelles :

- PA a la même signification que celle donnée ci-dessus ;
- a est tel que défini ci-dessus ;
- PB représente une séquence polymère issue d'au moins un monomère B choisi parmi les monomères vinylaromatiques et les monomères diéniques, PB représentant une séquence de la branche polymère de seconde génération ;
- PC, éventuellement présent, représente une séquence polymère, issue d'au moins un monomère C, différent de

B, choisi parmi les monomères vinylaromatiques ou (méth)acryliques et la vinylpyridine ; et

- r est le nombre de branches de [PB - PC], étant compris entre 3 et 30.

Les monomères vinylaromatiques et diéniques sont tels que définis ci-dessus.

Le terme "monomère (méth)acrylique", tel qu'employé dans la présente description, signifie un monomère choisi parmi les (méth)acrylates de formule respectivement :

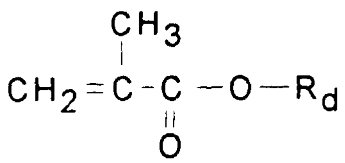

et

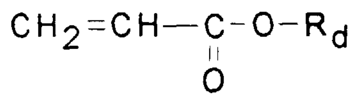

dans laquelle $R_d$ est choisi parmi les radicaux alkyle en $C_1$-$C_{18}$, linéaires ou ramifiés, primaires, secondaires ou tertiaires, cycloalkyle en $C_5$-$C_{18}$, (alcoxy en $C_1$-$C_{18}$)-alkyle en $C_1$-$C_{18}$, (alkylthio en $C_1$-$C_{18}$) -alkyle en $C_1$-$C_{18}$, aryle et arylalkyle, ces radicaux étant éventuellement substitués par au moins un atome d'halogène et/ou au moins un groupe hydroxyle, après protection de ce groupe hydroxyle, les groupes alkyle ci-dessus étant linéaires ou ramifiés, les (méth) acrylates de glycidyle, de norbornyle, d'isonorbornyle, les N,N di-(alkyl en $C_1$-$C_{18}$)-(méth)acrylamides.

Comme exemples de méthacrylates de la formule ci-dessus, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

La séquence PB et la séquence PC ont généralement chacune une masse moléculaire moyenne en poids de 1 000 à 50 000.

Ce polymère en étoile a une masse moléculaire moyenne en poids généralement comprise entre 10 000 et 2 000 000, en particulier, entre 20 000 et 1 000 000.

On peut citer tout particulièrement un polymère en étoile tel que défini ci-dessus dans lequel la séquence PB est une séquence de poly-1,4-cis-butadiène ou de polyisoprène, et la séquence PC, éventuellement présente, est une séquence de poly(ester acrylique) ou de poly(ester méthacrylique).

La présente invention a également pour objet un procédé de fabrication d'un polymère en étoile tel que défini ci-dessus, caractérisé par le fait que l'on conduit une polymérisation anionique d'au moins un monomère B, tel que défini ci-dessus, à l'aide d'un système amorceur multifonctionnel de formule (I) : $(PA)_aN^{n-}$ $nM^+$, et, le cas échéant, au moins un ligand choisi parmi ceux indiqués ci-dessus, ladite polymérisation étant conduite dans le milieu apolaire qui a servi à obtenir ledit amorceur multifonctionnel,

ce qui permet d'obtenir un polymère vivant en étoile à branches de seconde génération ;

et, le cas échéant, on fait réagir ledit polymère vivant en étoile ainsi obtenu avec au moins un monomère C, le cas échéant en présence d'un ligand tel que défini ci-dessus, ce qui permet d'obtenir un polymère vivant en étoile à branches PB-PC, PC étant les séquences terminales, et, pour obtenir le polymère en étoile attendu à l'état désactivé, on désactive les sites actifs terminaux des branches par une réaction avec une source de protons consistant notamment en un alcool, de l'eau ou un acide protonique, et

le cas échéant, on conduit une transestérification ou une hydrolyse en milieu acide du copolymère en étoile obtenu.

La température de polymérisation d'un diène conjugué ou d'un monomère vinylaromatique peut varier entre 0°C et 100°C et, de préférence, entre 0°C et 70°C. Celle de la polymérisation d'un monomère (méth)acrylique varie entre -50°C et + 60°C et elle est, de préférence, située entre - 30°C et + 20°C.

La durée de polymérisation d'un diène conjugué ou d'un monomère vinylaromatique dépend de la température et des concentrations initiales en monomère et en amorceur et peut varier, par exemple, entre 0,5 et 24 heures et, de préférence, entre 0,5 et 5 heures. Celle de la polymérisation du monomère (méth)acrylique est très courte et peut varier par exemple entre 1 seconde et 1 heure, de préférence entre 5 secondes et 15 minutes.

Le composé protonique ajouté en fin de polymérisation pour désactiver les sites actifs du polymère, peut être choisi notamment parmi l'eau, les alcools, les acides. On utilise particulièrement le méthanol acidifié.

On peut ultérieurement réduire au moins partiellement l'insaturation résiduelle des séquences polydiènes par des techniques d'hydrogénation usuelles afin d'améliorer ses propriétés, notamment la stabilité à la lumière ultraviolette.

Pour isoler le copolymère, on peut le précipiter de sa solution dans du méthanol en excès et le sécher sous vide

à température ambiante. On l'obtient alors sous forme de grains ou de poudre.

Les copolymères en étoile obtenus par le procédé selon l'invention sont des élastomères thermoplastiques et peuvent être traités par des procédés utilisés habituellement pour les matériaux thermoformables, par exemple, le moulage par extrusion ou injection, pour obtenir des articles comme fibres, revêtements, chaussures. Ils peuvent aussi constituer des gels fonctionnels et des adhésifs sensibles à la pression. On peut aussi les utiliser comme rhéomodifiants ainsi que comme agents pouvant améliorer la résistance au choc de divers autres polymères, comme le polyméthacrylate de méthyle, le polystyrène, le poly(chlorure de vinyle) et le polycarbonate. On peut aussi les associer à des agents de renforcement comme plastifiants, stabilisants, colorants, charges.

Tous ces produits sont particulièrement intéressants pour, notamment, leur bonne tenue à la chaleur, ce qui les rend appropriés à toute utilisation devant les soumettre à des températures élevées.

Les exemples suivants illustrent l'invention.

Dans ces exemples, on a utilisé les abréviations suivantes :

* sec. BuLi = sec.-butyllithium
* DVB = divinylbenzène
* MeOH = méthanol
* PS = séquence polymère de polystyrène
* PBD = séquence polymère de poly-1,4-cis-butadiène
* PI = séquence polymère de polyisoprène
* PMMA = séquence polymère de poly(méthacrylate de méthyle).

Dans les polymères de la présente invention, toutes ces séquences sont disposées comme branches d'étoiles :

| | |
|---|---|
| PSD•VB = | étoile de PS, précurseur d'amorceur multifonctionnel (polymère en étoile à branches de première génération) |
| PS•DVB•sec.BuLi = | amorceur multifonctionnel issu de PS•DVB. |

Tous les polymères ci-dessous sont des polymères en étoile comportant des branches de PS de première génération, et sont issus de l'amorceur en étoile cité ci-dessus.

| | |
|---|---|
| PS-PS = | double étoile de PS (polymère en étoile à branches de PS de première et seconde générations) ; |
| PS-PBD = | double étoile de PS-PBD (polymère en étoile à branches de PBD de seconde génération) ; |
| PS-PI = | double étoile de PS-PI (polymère en étoile à branches de PI de seconde génération) ; |

Les masses moléculaires moyennes en poids $M_w$ ont été obtenues par la méthode de la diffusion de la lumière.

Les proportions d'insaturations résiduelles dans les nodules ont été obtenues par spectroscopie UV à $\lambda$ = 295 nm.

**Exemple 1 :**

Synthèse d'un PSD•VB vivant

On a injecté 300 g de benzène, préalablement purifié, dans un réacteur d'une capacité de 1 litre, ayant subi plusieurs cycles vide/flammage/argon.

La solution a été ensuite amenée à 7°C, et 10 g de styrène ont été ajoutés. On a alors injecté quelques gouttes de sec.BuLi jusqu'à apparition d'une coloration jaune, pour éliminer toute trace d'impuretés protiques, puis la quantité de sec.BuLi (1,4 ml d'une solution de 0,65 M) calculée pour obtenir la masse voulue de la branche PS. On a ensuite laissé réagir pendant 30 min. à 50°C. Un prélèvement a alors été effectué pour caractériser la branche PS ainsi formée.

| | |
|---|---|
| $M_w$ mesurée de la branche PS = | 10600 |
| $M_w$ théorique = | 10900 |

Puis on a ajouté 0,75 ml de DVB sous forte agitation, et on a laissé le mélange réactionnel réagir pendant 1 heure à 30°C. Un prélèvement a alors été effectué pour caractériser le PS•DVB ainsi formé.

| | |
|---|---|
| $M_w$ de PS•DVB = | 105 000 |
| % de doubles liaisons résiduelles ≈ | 7 |

**Exemples 2 à 4** :

Synthèse de trois PS•DVB vivants

On a procédé comme à l'exemple 1 pour obtenir tout d'abord les bras de PS de $M_w$ de 500, 1 000 et 22 300 (exemples respectivement 2, 3, 4).

Toujours en procédant comme à l'exemple 1, on a fait réagir les solutions résultantes avec du DVB. Les résultats, rapportés dans le tableau I suivant, montrent que, quel que soit le temps de réaction avec le DVB, il reste des doubles liaisons résiduelles (notées /\\).

Tableau I

| **Exemple 2** | | | **Exemple 3** | | | **Exemple 4** | | |
|---|---|---|---|---|---|---|---|---|
| Temps de réaction du DVB (mn) | $M_w$ de PS•DVB | % de /\\ | Temps de réaction du DVB (mn) | $M_w$ de PS•DVB | % de /\\ | Temps de réaction du DVB (mn) | $M_w$ de PS•DVB | % de /\\ |
| 30 | 3 700 | 10,8 | 20 | 91 200 | 14,0 | 30 | 132 000 | 9,8 |
| 60 | 42 000 | 9,9 | 60 | 114 000 | 12,0 | 60 | 143 000 | 8,5 |
| 80 | 49 000 | 7,3 | 240 | 142 000 | 9,6 | 180 | 170 000 | 8,5 |
| 1 000 | 53 000 | 6,0 | 1 000 | 160 000 | 9,6 | 1 080 | 210 000 | 8,0 |

**Exemples 5 à 9** :

Synthèse de cinq PS•DVB vivants

On a procédé comme à l'exemple 1 pour synthétiser cinq PS•DVB vivants à nombre de branches et longueur de branches variables. Les résultats sont rapportés dans le tableau II suivant.

Tableau II

| **Exemple** | **$M_w$ de la branche PS** | **% en poids de DVB** | **$M_w$ de PS•DVB étoile** | **Nombre moyen de branches PS** | **% en masse de chaînes linéaires à la fin** |
|---|---|---|---|---|---|
| 5 | 4 700 | 21,0 | 154 000 | 26 | 3 |
| 6 | 4 500 | 8,5 | 52 700 | 10 | 6 |
| 7 | 10 100 | 11,0 | 160 000 | 14 | 5 |
| 8 | 22 300 | 8,0 | 210 000 | 9 | 8 |
| 9 | 14 300 | 7,7 | 114 000 | 8 | 8 |

**Exemple 10 (comparatif)** :

Utilisation d'un PS•DVB vivant tel quel dans la synthèse d'un polymère en étoile avec le styrène comme monomère pour les branches de seconde génération

On a utilisé, comme amorceur multifonctionnel de polymérisation anionique, le polymère vivant PS•DVB de l'exemple 1. A cet effet, on a ajouté à la solution telle qu'obtenue à l'exemple 1, 20 ml de styrène à 40-50°C. Il s'est alors formé un gel irréversible, ce qui est dû à une réticulation chimique du système.

**Exemple 11** :

Synthèse d'un PS-PS

① Préparation de PS•DVB•sec.BuLi à partir du PS•DVB vivant de l'exemple 1.

A la solution de polymère vivant PS•DVB obtenue à l'exemple 1, on a ajouté 1,5 ml de sec.BuLi (0,65 M), ayant supposé qu'il restait 12% de doubles liaisons résiduelles, et on a laissé réagir pendant 2 heures à 50°C.

② Synthèse du PS-PS

A la solution préparée ci-dessus, on ajouté 20 ml de styrène, et on a laissé réagir à 40-50°C pendant 2 heures.

On a stoppé la polymérisation par ajout de MeOH ; il n'a pas été observé de réticulation chimique. Puis, on a isolé le polymère final par précipitation dans MeOH.

**Caractéristiques du polymère formé** : ce polymère est constitué par 40 % en poids de PS-PS ($M_w$ = 220 000) et 60 % en poids d'un homopolymère linéaire du styrène ($M_w$ = 65 000). La présence de l'homopolymère est due à la présence de sec-BuLi en léger excès par rapport aux doubles liaisons résiduelles.

**Exemple 12** :

Synthèse d'un PS-PI

① Préparation du PS•DVB vivant

On a injecté 200 ml de benzène, préalablement purifié, dans un réacteur d'une capacité de 1 litre, ayant subi plusieurs cycles vide/flammage/argon.

La solution a ensuite été amenée à 7°C, et 7,7 ml de styrène ont été ajoutés. On a alors injecté quelques gouttes de sec.BuLi jusqu'à l'apparition d'une coloration jaune pour éliminer toute trace d'impuretés protiques, puis la quantité de sec.BuLi (1,9 ml d'une solution 0,353 M) calculée pour obtenir la masse voulue de la branche PS. On a ensuite laissé réagir pendant 1,25 heure à 50°C. Un prélèvement a alors été effectué pour caractériser la branche de PS ainsi formée :

$M_w$ de la branche PS = 6 700

A la solution obtenue, on a ajouté 2,3 de ml de DVB sous forte agitation, et on a laissé le mélange réactionnel réagir pendant 1 heure à 35°C. Un prélèvement a alors été effectué pour caractériser le PS•DVB ainsi formé :

$M_w$ de PS•DVB = 211 500
% de liaisons résiduelles ≈ 6

② Préparation du PS•DVB•sec.BuLi

A la solution de polymère vivant PS•DVB obtenue ci-dessus, on a ajouté 2,6 ml de sec.BuLi (0,353 M), ayant supposé qu'il restait 7 % de doubles liaisons résiduelles, et on a laissé réagir pendant 35 minutes à 35 °C.

② Synthèse du PS-PI

A la solution réactionnelle ci-dessus, on a ajouté 19 ml d'isoprène, et on a laissé réagir pendant 2 heures à 45°C.

Le milieu réactionnel devient très visqueux en raison des associations entre sites actifs.

On a stoppé la polymérisation par ajout de MeOH ; la viscosité chute alors brutalement par suite de la rupture des agrégats entre sites actifs ; il n'a pas été observé de réticulation chimique, et on a isolé le polymère final par précipitation dans MeOH.

**Caractéristiques du polymère formé** : ce polymère est constitué par 58 % de PS-PI et 42 % d'un homopolymère linéaire de l'isoprène. Le polymère PS-PI isolé par fractionnement à l'aide du système heptane/éthanol présente une $M_w$ de 425 000, et il contient 58 % en poids de PS et 42 % en poids de PI.

**Exemple 13 :**

Synthèse d'un PS-PBD

①Préparation du PS•DVB vivant

On a injecté 100 ml de benzène préalablement purifié, dans un réacteur d'une capacité de 1 litre, ayant subi plusieurs cycles vide/flammage/argon.

La solution a été ensuite amenée à 7 °C, et 3,3 ml de styrène ont été ajoutés. On a alors injecté quelques gouttes de sec.BuLi jusqu'à l'apparition d'une coloration jaune pour éliminer toute trace d'impuretés protiques, puis la quantité de sec.BuLi (0,95 ml d'une solution 0,63 M) calculée pour obtenir la masse voulue de la branche PS. On a ensuite laissé réagir pendant 30 minutes à 60°C. Un prélèvement a alors été effectué pour caractériser la branche de PS ainsi formée :

$M_w$ de la branche PS = 4 200

Puis 0,5 ml de DVB ont été ajoutés sous forte agitation, et on a laissé le mélange réactionnel réagir pendant 1,5 heure à 35°C. Un prélèvement a alors été effectué pour caractériser le PS•DVB ainsi formé.

| | |
|---|---|
| $M_w$ de PS•DVB = | 99 600 |
| % de doubles liaisons résiduelles ≈ | 12 |

②Préparation du PS•DVB•sec.BuLi

A la solution de polymère vivant PS•DVB obtenue ci-dessus, on a ajouté 0,80 ml de sec.BuLi (0,63 M), ayant supposé qu'il restait 14 % de doubles liaisons résiduelles, et on a laissé réagir pendant 15 minutes à 50°C.

③Synthèse du PS-PBD

A la solution préparée ci-dessus, on a ajouté 8,1 g de butadiène, et on a laissé réagir pendant 16 heures à 40-50°C.

Le milieu réactionnel devient très visqueux en raison des associations entre sites actifs.

On a stoppé la polymérisation par ajout de MeOH ; il n'a pas été observé de réticulation chimique. Puis on a isolé le polymère final par précipitation dans MeOH.

**Caractéristiques du polymère formé** : ce polymère est constitué par 42 % en poids de PS-PBD et 58 % en poids d'un homopolymère linéaire du butadiène. Le polymère PS-PBD isolé par fractionnement à l'aide du système heptane/éthanol présente un $M_w$ de 425 000, et il contient 72 % en poids de PBD et 28 % en poids de PS.

**Exemple 14 :**

Préparation d'un PS•DVB•sec.BuLi par réactivation d'un PS.DVB désactivé

①Obtention du PS•DVB désactivé

On a préparé un polymère vivant PS•DVB de la même manière que celle décrite à l'exemple 1. On l'a désactivé par addition d'une solution très diluée de MeOH dans le benzène jusqu'à disparition de la couleur rouge caractéristique des centres actifs, et on l'a isolé par précipitation du MeOH.

| | |
|---|---|
| $M_w$ des branches de PS = | 2 000 |
| Rapport DVB/Branche de PS = | 4 |

②Obtention du PS•DVB•sec.BuLi

On a dissous 2,5 g de ce PS•DVB dans 150 ml de benzène. On a additionné ensuite 0,6 ml de sec.BuLi (0,59 M), quantité nécessaire pour attaquer les doubles liaisons résiduelles de PS•DVB (quantité calculée pour réactiver des doubles liaisons résiduelles estimées à 11 %), ce qui a conduit à la formation de sites carbanioniques, amorceurs de la polymérisation anionique.

On a alors laissé réagir pendant 45 minutes à 35°C. La couleur orange apparaissant est signe de la réactivation de la molécule (création de sites actifs).

**Exemple 15 :**

Préparation d'un PS-PS à partir de PS•DVB•sec.BuLi de l'exemple 14

A la solution d'amorceur préparée selon l'exemple 14, on a ajouté 11,8 g de styrène, et on a laissé réagir pendant 1,5 heure à 40°C. Il n'a pas été observé de réticulation chimique.

**Résultats :**

| | |
|---|---|
| Rendement : | 100 % |
| Composition du polymère brut : | 70 % en poids de PS-PS |
| | 30 % en poids de PS homopolymère linéaire. |

**Exemple 16 :**

Préparation d'un PS-PI à partir d'un PS•DVB•sec.BuLi préparé comme à l'exemple 14 (2)

①Préparation du PS•DVB•sec.BuLi

On a procédé comme décrit à l'exemple 14(2) en utilisant 2,85 g du PS• DVB selon l'exemple 14(1), et 1,7 ml de sec.-BuLi (0,49 M), avec 40 minutes de réaction à 30°C.

②Synthèse du PS-PI

On a procédé comme à l'exemple 15, mais en utilisant 8,9 g d'isoprène et un temps de réaction de 2,5 heures. Il n'a pas été observé de réticulation chimique.

$M_w$ = 700 000

**Résultats :**

| | |
|---|---|
| Rendement : | 100 % |
| Composition du polymère brut : | 40 % en poids de PS-PI |
| | 60 % en poids de PI homopolymère linéaire. |
| Rapport en poids PS/PI du polymère : | 0,3 |

**Revendications**

1. Amorceur multifonctionnel de polymérisation anionique, sous forme de polymère en étoile, soluble en milieu apolaire, ne comportant plus (ou pratiquement plus) de doubles liaisons résiduelles, représenté par la formule générale (I) :

$$(PA)_a N^{n-}\ nM^+ \qquad (I)$$

dans laquelle :

- PA représente une séquence polymère issue d'au moins un monomère A choisi parmi les monomères vinylaromatiques ou diéniques ;
- a représente le nombre de branches de la séquence PA, compris entre 3 et 15 ;
- N représente un nodule réticulé ne comportant plus ou pratiquement plus de doubles liaisons résiduelles ayant la formule :

$$(PMr)(RLi)_p$$

dans laquelle :

- Mr est un monomère comprenant au moins deux doubles liaisons polymérisables par molécule ;

- PMr est un nodule réticulé d'au moins un monomère Mr polymérisé et contenant 3 à 30 % de doubles liaisons résiduelles par rapport aux doubles liaisons initiales provenant du monomère Mr;
- R est un radical alkyle à chaîne droite ou ramifiée, contenant 1 à 6 atomes de carbone, un radical aryle à un ou plusieur cycle(s) éventuellement substitué(s), un radical arylalkyle ou alkylaryle dans lequel le groupe alkyle a de 1 à 6 atomes de carbone, un radical cycloalkyle et un radical alcényle en $C_2$-$C_6$ substitué par un groupe aryle ou alkylaryle ;
- p est le nombre de doubles liaisons résiduelles de PMr neutralisées par RLi ;

♦ n est le nombre de sites anioniques contenus dans le nodule réticulé N ; n est égal à a + p ou p, p ayant la signification précédente et a étant le nombre de sites anioniques contenu dans le nodule réticulé PMr correspondant au nombre de branches de séquence PA et M est un métal alcalin ou alcalino-terreux, de préférence le lithium.

**2.** Amorceur multifonctionnel selon la revendication 1, caractérisé par le fait que le monomère A est choisi parmi le styrène, le butadiène et l'isoprène.

**3.** Amorceur multifonctionnel selon l'une des revendications 1 et 2, caractérisé par le fait que le monomère Mr est le divinylbenzène.

**4.** Amorceur multifonctionnel selon l'une des revendications 1 à 3, caractérisé par le fait que RLi est choisi parmi le sec-butyllithium, le n-butyllithium, l'alphaméthyl-styryllithium , le 1,1-diphénylhexyllithium, le diphénylméthyl-lithium et le 1,1-diphényl-3-méthylpentyllithium.

**5.** Amorceur multifonctionnel selon l'une des revendications 1 à 4, caractérisé par le fait que la masse moléculaire moyenne en poids d'une branche PA est 500 à 200 000 ou plus.

**6.** Amorceur multifonctionnel selon l'une des revendications 1 à 5, caractérisé par le fait qu'il représente une masse moléculaire moyenne en poids de 2 500 à 500 000 ou plus.

**7.** Amorceur multifonctionnel selon l'une des revendications 1 à 6, se présentant à l'état dissous en milieu apolaire, choisi notamment parmi le toluène, le benzène, l'éthylbenzène et leurs mélanges, le cas échéant en association avec une quantité mineure de cyclohexane, d'hexane ou d'heptane.

**8.** Procédé de préparation de l'amorceur multifonctionnel tel que défini à l'une des revendications 1 à 7 caractérisé par le fait que :

**(A) dans une première étape,** on conduit une polymérisation anionique d'au moins ùn monomère A, en milieu apolaire, à l'aide d'un système d'amorçage constitué par :

(a) au moins un amorceur monofonctionnel de formule (II) :

$$R^1 - M \qquad (II)$$

dans laquelle :

- M désigne un métal alcalin ou alcalino-terreux ; et
- $R^1$ désigne un radical alkyle à chaîne linéaire ou ramifiée contenant 1 à 6 atomes de carbone, un radical aryle à un ou plusieurs cycle(s), éventuellement substitué(s), un radical arylalkyle ou alkylaryle dans lequel le groupe alkyle a de 1 à 6 atomes de carbone, un radical cycloalkyle et un radical alcényle en $C_2$-$C_6$ substitué par un groupe aryle ou alkylaryle ;

b) le cas échéant, au moins un ligand choisi parmi les sels minéraux de métaux alcalins, les complexants macrocycliques non azotés, et les composés organiques de métaux alcalins dans lesquels le métal alcalin est associé à un groupe de formule $B(R^2)_4$ où $R^2$ est choisi parmi l'atome d'hydrogène et les radicaux alkyle et aryle,
ce qui permet d'obtenir un site actif vivant à l'extrémité de chaque séquence polymère $PA^-$ ;

**(B) dans une seconde étape,** on fait réagir les séquences vivantes PA-, dans le milieu qui a servi à conduire sa polymérisation par voie anionique, avec au moins un monomère Mr en rapport molaire de 2,5 - 15 par centre actif pour former un nodule réticulé PMr contenant 3 à 30 % de doubles liaisons résiduelles par rapport aux doubles liaisons initiales provenant du monomère Mr, ce qui permet d'obtenir un polymère vivant en étoile de la formule (III) :

$$(PA)_a(PMr)^{a-}, aM^+ \qquad (III)$$

**(C) dans une troisième étape,** ou bien

(C1) on fait réagir le polymère en étoile précurseur de formule (III) : $(PA)_a(PMr)^{a-}$, $aM^+$ avec une quantité d'un composé de la formule RLi telle que définie précédemment, capable de consommer les doubles liaisons résiduelles du nodule dudit polymère vivant (III), ce qui permet d'obtenir l'amorceur multifonctionnel attendu de formule (Ia) :

$$(PA)_a\left[PMr(RLi)_p\right]^{(a+p)^-},(a+p)M^+ \qquad (Ia)$$

ou bien

(C2) on désactive les sites actifs du polymère en étoile de formule (III) : $(PA)_a(PMr)^{a-}$, $aM^+$ par une réaction avec une source de protons consistant notamment en un alcool, de l'eau ou un acide protonique, ce qui, après séparation, permet d'obtenir le polymère en étoile précurseur à l'état désactivé de formule (IV) :

$$(PA)_a(PMr) \qquad (IV)$$

et

**(D) dans une quatrième étape,** conduite dans le cas où l'opération (C2) a été effectuée à la troisième étape, on réactive le polymère précurseur désactivé de formule (IV) : $(PA)_a(PMr)$ par réaction avec RLi tel que défini ci-dessus, de façon à reformer des sites actifs aux dépens des doubles liaisons résiduelles du nodule dudit polymère (IV) : $(PA)_a(PMr)$, ce qui permet d'obtenir l'amorceur multifonctionnel attendu

$$(PA)_a\left[PMr(RLi)_p\right]^{p^-},pM^+ .$$

**9.** Procédé selon la revendication 8, caractérisé par le fait que l'agent amorceur monofonctionnel de formule (II) utilisé à l'étape (A) est choisi parmi le sec.-butyllithium, le n-butyllithium et l'alphaméthylstyryllithium, le 1,1-diphénylhexyllithium, le diphénylméthyl-lithium et le 1,1-diphényl-3-méthyl-pentyllithium.

**10.** Procédé selon l'une des revendications 8 et 9, caractérisé par le fait qu'à l'étape (A), la proportion molaire du ligand vis-à-vis de l'amorceur est au moins égale à 0 et peut aller jusqu'à 50.

**11.** Procédé selon l'une des revendications 8 à 10, caractérisé par le fait qu'à l'étape (CI) ou (D) , on fait réagir le composé RLi à raison de 0,7 à 2 équivalents par rapport aux doubles liaisons résiduelles.

**12.** Procédé selon l'une des revendications 8 à 11, caractérisé par le fait qu'on conduit les différentes étapes à une température se situant entre 20°C et 100°C.

**13.** Procédé selon l'une des revendications 9 à 12, caractérisé par le fait qu'on effectue les polymérisations dans au moins un solvant apolaire choisi parmi le toluène, le benzène, l'éthylbenzène et leurs mélanges.

**14.** Polymère en étoile représenté par la formule (V) :

$$[PA]_a N[PB - PC^-]_r, rM^+ \quad (V)$$

ou la formule (Va) :

$$[PA]_a N(PB - PC]_r \quad (Va)$$

selon qu'il est respectivement à l'état vivant ou à l'état désactivé,
formules dans lesquelles :

- PA a la même signification que celle donnée à la revendication 1 ;
- a est tel que défini à la revendication 1 ;
- PB représente une séquence polymère issue d'au moins un monomère B choisi parmi les monomères vinylaromatiques et les monomères diéniques, PB représentant une séquence de la branche polymère de seconde génération ;
- PC, éventuellement présent, représente une séquence polymère, issue d'au moins un monomère C, différent de B, choisi parmi les monomères vinylaromatiques ou (méth)acryliques et la vinylpyridine ; et
- r est le nombre de branches de [PB-PC], étant compris entre 3 et 30.

**15.** Polymère en étoile selon la revendication 14, caractérisé par le fait que la séquence PB et la séquence PC ont chacune une masse moléculaire moyenne en poids de 1 000 à 200 000.

**16.** Polymère en étoile selon l'une des revendications 14 et 15, caractérisé par le fait qu'il a une masse moléculaire moyenne en poids comprise entre 10 000 et 2 000 000.

**17.** Polymère en étoile selon l'une des revendications 14 à 16, caractérisé par le fait que la séquence PB est une séquence de poly-1,4-cis-butadiène ou de polyisoprène, et la séquence PC, éventuellement présente, est une séquence de poly(ester acrylique) ou de poly(ester méthacrylique).

**18.** Procédé de fabrication d'un polymère en étoile tel que défini à l'une des revendications 14 à 17, caractérisé par le fait que l'on conduit une polymérisation anionique d'au moins un monomère B, tel que défini à la revendication 14, à l'aide d'un système amorceur multifonctionnel de formule (I) : $(PA)_aN^{n-}nM^+$, et, le cas échéant, au moins un ligand choisi parmi ceux indiqués ci-dessus, ladite polymérisation étant conduite dans le milieu apolaire qui a servi à obtenir ledit amorceur multifonctionnel,
ce qui permet d'obtenir un polymère vivant en étoile à branches de seconde génération ;
et, le cas échéant, on fait réagir ledit polymère vivant en étoile ainsi obtenu avec au moins un monomère C, le cas échéant en présence d'un ligand tel que défini ci-dessus, ce qui permet d'obtenir un polymère vivant en étoile à branches PB-PC, PC étant les séquences terminales, et, pour obtenir le polymère en étoile attendu à l'état désactivé, on désactive les sites actifs terminaux des branches par une réaction avec une source de protons consistant notamment en un alcool, de l'eau ou un acide protonique ; et
le cas échéant, on conduit ensuite une transestérification ou une hydrolyse en milieu acide du copolymère en étoile obtenu.

**19.** Procédé selon la revendication 18, caractérisé par le fait que l'on conduit la polymérisation d'un diène conjugué ou d'un monomère vinylaromatique entre 0 et 100 °C, et la polymérisation d'un monomère (méth)acrylique entre - 50 et + 60°C.

**20.** Procédé selon l'une des revendications 17 et 18, caractérisé par le fait que l'on conduit la polymérisation d'un diène conjugué ou d'un monomère vinylaromatique pendant une durée de 0,5 à 24 heures, et la polymérisation d'un monomère (méth)acrylique, pendant une durée de 1 seconde à 1 heure.

**21.** Application des copolymères en étoile élastomères thermoplastiques tels que définis à l'une des revendications 14 à 17, à la préparation de produits moulés par extrusion ou injection, d'adhésifs sensibles à la pression, et d'agents améliorant la résistance au choc et la tenue thermique de polymères de méthacrylate de méthyle, de polystyrène, de poly(chlorure de vinyle) et de polycarbonate.

## Claims

1. Multifunctional initiator of anionic polymerization, in the form of a star-shaped polymer, soluble in apolar medium, no longer (or practically no longer) containing any residual double bonds, denoted by the general formula (I):

$$(PA)_a N^{n-} nM^+ \quad (I)$$

in which:

PA denotes a polymer block originating from at least one monomer A chosen from vinylaromatic or diene monomers;
a denotes the number of arms of the PA block, included between 3 and 15;
N denotes a crosslinked core no longer or practically no longer containing any residual double bonds, which has the formula:

$$(PMc)\ (RLi)_p$$

in which:

- Mc is a monomer containing at least two polymerizable double bonds per molecule;
- PMc is a crosslinked core of at least one polymerized monomer Mc, containing 3 to 30 % of residual double bonds relative to the initial double bonds originating from the monomer Mc;
- R is an alkyl radical with a linear or branched chain containing 1 to 6 carbon atoms, an aryl radical with one or a number of optionally substituted ring(s), an arylalkyl or alkylaryl radical in which the alkyl group has from 1 to 6 carbon atoms, a cycloalkyl radical and a $C_2$-$C_6$ alkenyl radical substituted by an aryl or alkylaryl group;
- p is the number of residual double bonds in PMc which are neutralized by RLi;

n is the number of anionic sites present in the crosslinked core N; n is equal to a + p (or to p), p having the above meaning and a being the number of anionic sites present in the crosslinked PMc core corresponding to the number of arms of the PA block
and M is an alkali metal or alkaline-earth metal, preferably lithium.

2. Multifunctional initiator according to Claim 1, characterized in that the monomer A is chosen from styrene, butadiene and isoprene.

3. Multifunctional initiator according to either of Claims 1 and 2, characterized in that the monomer Mc is divinylbenzene.

4. Multifunctional initiator according to one of Claims 1 to 3, characterized in that RLi is chosen from sec-butyllithium, n-butyllithium, alpha-methylstyryllithium, 1,1-diphenylhexyllithium, diphenylmethyllithium and 1,1-diphenyl-3-methylpentyllithium.

5. Multifunctional initiator according to one of Claims 1 to 4, characterized in that the weight-average molecular mass of a PA arm is 500 to 200,000 or more.

6. Multifunctional initiator according to one of Claims 1 to 5, characterized in that it represents a weight-average molecular mass of 2500 to 500,000 or more.

7. Multifunctional initiator according to one of Claims 1 to 6, present in the dissolved state in apolar medium chosen especially from toluene, benzene, ethylbenzene and mixtures thereof, if appropriate in combination with a minor quantity of cyclohexane, hexane or heptane.

8. Process for the preparation of the multifunctional initiator as defined in one of Claims 1 to 7, characterized in that:

**(A) in a first stage** an anionic polymerization of at least one monomer (A) is conducted in apolar medium with

the aid of an initiating system consisting of:

a) at least one monofunctional initiator of formula (II):

$$R^1\text{-}M \qquad (II)$$

in which:

- M denotes an alkali or alkaline-earth metal, and
- $R^1$ denotes an alkyl radical with a linear or branched chain containing 1 to 6 carbon atoms, an aryl radical with one or a number of optionally substituted ring(s), an arylalkyl or alkylaryl radical in which the alkyl group has from 1 to 6 carbon atoms, a cycloalkyl radical and a $C_2$-$C_6$ alkenyl radical substituted by an aryl or alkylaryl group,

b) if appropriate, at least one ligand chosen from the inorganic salts of alkali metals, nonnitrogenous macrocyclic complexing agents and organic compounds of alkali metals in which the alkali metal is associated with a group of formula $B(R^2)_4$ where $R^2$ is chosen from the hydrogen atom and the alkyl and aryl radicals, which makes it possible to obtain a living active site at the end of the polymer block $PA^-$;

**(B) in a second stage** the living block $PA^-$ is reacted, in the medium which has been used to conduct its polymerization by anionic route, with at least one monomer Mc in a molar ratio of 2.5 - 15 per active centre, to form a crosslinked core PMc containing 3 to 30 % of residual double bonds relative to the initial double bonds originating from the monomer Mc, which makes it possible to obtain a star-shaped living polymer of formula (III):

$$(PA)_a(PMc)^{a-},aM^+ \qquad (III)$$

**(C) in a third stage,** either

(C1) the star-shaped polymer precursor of formula (III): $(PA)_a(PMc)^{a-}$, $aM^+$ is reacted with a quantity of a compound of formula RLi as defined above, capable of consuming the residual double bonds of the core of the said living polymer (III), which makes it possible to obtain the expected multifunctional initiator of formula (Ia):

$$(PA)_a[PMc(RLi)_p]^{(a+p)-},\ (a+p)M^+ \qquad (Ia)$$

or
(C2) the active sites of the star-shaped polymer of formula (III): $(PA)_a(PMc)^{a-}$, $aM^+$ are deactivated by a reaction with a source of protons consisting especially of an alcohol, water or a protonic acid, which, after separation, makes it possible to obtain the star-shaped precursor polymer in the deactivated state of formula (IV):

$$(PA)_a(PMc) \qquad (IV)$$

and

**(D) in a fourth stage,** conducted in the case where the operation (C2) has been performed in the third stage, the deactivated precursor polymer of formula (IV): $(PA)_a(PMc)$ is reactivated by reaction with RLi as defined above, so as to re-form active sites at the expense of the residual double bonds of the core of the said polymer (IV) : $(PA)_a(PMc)$, which makes it possible to obtain the expected multifunctional initiator $(PA)_a[PMc(RLi)_p]^{p-}$, $pM^+$.

**9.** Process according to Claim 8, characterized in that the monofunctional initiating agent of formula (II) employed in

stage (A) is chosen from see-butyllithium, n-butyllithium and alpha-methylstyryllithium, 1,1-diphenylhexyllithium, diphenylmethyllithium and 1,1-diphenyl-3-methylpentyllithium.

**10.** Process according to either of Claims 8 and 9, characterized in that in stage (A) the molar proportion of the ligand to the initiator is at least equal to 0 and may range up to 50.

**11.** Process according to one of Claims 8 to 10, characterized in that in stage (C1) or (D) the compound RLi is reacted in a proportion of 0.7 to 2 equivalents relative to the residual double bonds.

**12.** Process according to one of Claims 8 to 11, characterized in that the various stages are conducted at a temperature which is between 20°C and 100°C.

**13.** Process according to one of Claims 9 to 12, characterized in that the polymerizations are performed in at least one apolar solvent chosen from toluene, benzene, ethylbenzene and mixtures thereof.

**14.** Star-shaped polymer denoted by the formula (V):

$$[PA]_a N[PB\text{-}PC^-]_r, \; rM^+ \qquad (V)$$

or the formula (Va):

$$[PA]_a N[PB\text{-}PC]_r \qquad (Va)$$

depending on whether it is in the living state or the deactivated state respectively, in which formulae:

- PA has the same meaning as that given in Claim 1,
- a is as defined in Claim 1,
- PB denotes a polymer block originating from at least one monomer B chosen from vinylaromatic monomers and diene monomers, PB denoting a block of the second-generation polymer arm,
- PC, optionally present, denotes a polymer block originating from at least one monomer C, other than B, chosen from the vinylaromatic or (meth)acrylic monomers and vinylpyridine, and
- r is the number of [PB-PC] arms, being included between 3 and 30.

**15.** Star-shaped polymer according to Claim 14, characterized in that both the PB block and the PC block have a weight-average molecular mass of 1 000 to 200,000 each.

**16.** Star-shaped polymer according to either of Claims 14 and 15, characterized in that it has a weight-average molecular mass of between 10,000 and 2,000,000.

**17.** Star-shaped polymer according to one of Claims 14 to 16, characterized in that the PB block is a cis-poly-1,4-butadiene or polyisoprene block, and the PC block, optionally present, is a poly(acrylic ester) or poly(methacrylic ester) block.

**18.** Process for the manufacture of a star-shaped polymer as defined in one of Claims 14 to 17, characterized in that an anionic polymerization of at least one monomer B, as defined in Claim 14, is conducted with the aid of a multifunctional initiator system of formula (I): $(PA)_a N^{n-} nM^+$ and, if appropriate, at least one ligand chosen from those indicated above, the said polymerization being conducted in the apolar medium which has been used to obtain the said multifunctional initiator,
which makes it possible to obtain a star-shaped living polymer with second-generation arms,
and, if appropriate, the said star-shaped living polymer thus obtained is reacted with at least one monomer C, if appropriate in the presence of a ligand as defined above, which makes it possible to obtain a star-shaped living polymer with PB-PC arms, PC being the end blocks and, to obtain the expected star-shaped polymer in the deactivated state, the end active sites of the arms are deactivated by a reaction with a source of protons consisting especially of an alcohol, water or a protonic acid, and
if appropriate, a transesterification or a hydrolysis in acidic medium of the star-shaped copolymer obtained is

conducted.

**19.** Process according to Claim 18, characterized in that the polymerization of a conjugated diene or of a vinylaromatic monomer is conducted between 0 and 100°C and the polymerization of a (meth)acrylic monomer between -50 and +60°C.

**20.** Process according to either of Claims 17 and 18, characterized in that the polymerization of a conjugated diene or of a vinylaromatic monomer is conducted for a period of 0.5 to 24 hours and the polymerization of a (meth) acrylic monomer for a period of 1 second to 1 hour.

**21.** Application of the star-shaped thermoplastic elastomer copolymers as defined in one of Claims 14 to 17 to the preparation of extrusion- or injection-moulded products, of pressure-sensitive adhesives and of agents improving the impact strength and the heat resistance of methyl methacrylate polymers, of polystyrene, of poly(vinyl chloride) and of polycarbonate.

## Patentansprüche

**1.** In apolarem Milieu löslicher, multifunktioneller Starter zur anionischen Polymerisation in Form eines sternförmigen Polymers, der keine (oder praktisch keine) verbleibenden Doppelbindungen mehr enthält und durch die allgemeine Formel (I)

$$(P\ A)_a N^{n-}\ nM^+ \qquad (I)$$

wiedergegeben wird, in der:

- PA einen Polymerblock darstellt, der aus mindestens einem Monomer A stammt, das ausgewählt ist aus vinylaromatischen Monomeren oder Dienmonomeren;
- a die Anzahl der Verzweigungen des Blockes PA darstellt und zwischen 3 und 15 liegt;
- N einen vernetzten Knoten darstellt, der keine oder praktisch keine verbleibenden Doppelbindungen mehr aufweist und die Formel

  $$(PMr)(RLi)_p$$

  besitzt, in der:

  - Mr ein Monomer ist, das mindestens zwei polymerisierbare Doppelbindungen pro Molekül umfaßt;
  - PMr ein vernetzter Knoten mindestens eines polymerisierten Monomers Mr ist und 3 bis 30 % verbleibende Doppelbindungen in bezug auf die anfänglichen Doppelbindungen, die aus dem Monomer Mr stammen, enthält;
  - R ein Alkylrest mit gerader oder verzweigter Kette mit 1 bis 6 Kohlenstoffatomen, ein Arylrest mit einem oder mehreren Ringen, die gegebenenfalls substituiert sind, ein Arylalkyl- oder Alkylarylrest, in dem die Alkylgruppe 1 bis 6 Kohlenstoffatome aufweist, ein Cycloalkylrest oder ein $C_2$-$C_6$-Alkenylrest ist, der mit einer Aryl- oder Alkylarylgruppe substituiert ist;
  - p die Anzahl der verbleibenden Doppelbindungen von PMr ist, die durch RLi neutralisiert sind;
  - n die Anzahl anionischer Stellen sind, die in dem vernetzten Knoten N enthalten ist, wobei n = a + p oder p ist, wobei p die zuvor angegebene Bedeutung besitzt und a die Anzahl der anionischen Stellen darstellt, die in dem vernetzten Knoten PMr entsprechend der Anzahl der Verzweigungen des Blockes PA enthalten sind; und

- M ein Alkalimetall oder Erdalkalimetall ist, vorzugsweise Lithium.

**2.** Multifunktioneller Starter nach Anspruch 1, dadurch gekennzeichnet, daß das Monomer A ausgewählt ist aus Styrol, Butadien und Isopren.

**3.** Multifunktioneller Starter nach Anspruch 1 oder 2, dadurch gekennzeichnet, daß das Monomer Mr Divinylbenzol ist.

**4.** Multifunktioneller Starter nach einem der Ansprüche 1 bis 3, dadurch gekennzeichnet, daß RLi ausgewählt ist aus sek.-Butyllithium, n-Butyllithium, α-Methylstyryllithium, 1,1-Diphenylhexyllithium, Diphenylmethyllithium und 1,1 -Diphenyl-3-methylpentyllithium.

**5.** Multifunktioneller Starter nach einem der Ansprüche 1 bis 4, dadurch gekennzeichnet, daß die gwichtsmittlere Molekularmasse einer Verzweigung PA 500 bis 200.000 oder mehr beträgt.

**6.** Multifunktioneller Starter nach einem der Ansprüche 1 bis 5, dadurch gekennzeichnet, daß er eine gewichtsmittlere Molekularmasse von 2.500 bis 500.000 oder mehr aufweist.

**7.** Multifunktioneller Starter nach einem der Ansprüche 1 bis 6, welcher in apolarem Milieu in gelöstem Zustand vorliegt, wobei das apolare Milieu insbesondere ausgewählt ist aus Toluol, Benzol, Ethylbenzol und deren Mischungen, gegebenenfalls in Verbindung mit einer kleineren Menge an Cyclohexan, Hexan oder Heptan.

**8.** Verfahren zur Herstellung eines multifunktionellen Starters nach einem der Ansprüche 1 bis 7, dadurch gekennzeichnet, daß:

(A) man **in einem ersten Verfahrensschritt** in apolarem Milieu eine anionische Polymerisation mindestens eines Monomers A mit Hilfe eines Startersystems durchführt, das besteht:

(a) aus mindestens einem multifunktionen Starter der Formel (II)

$$R^1\text{-}M \qquad \text{(II)}$$

in der:

- M ein Alkali- oder Erdalkalimetall bezeichnet; und
- $R^1$ einen Alkylrest mit gerader oder verzweigter Kette mit 1 bis 6 Kohlenstoffatomen, einen Arylrest mit einem oder mehreren Ringen, die gegebenenfalls substituiert sind, einen Arylalkyl- oder Alkylarylrest, in dem die Alkylgruppe 1 bis 6 Kohlenstoffatome aufweist, einen Cycloalkylrest oder einen mit einer Aryl- oder Alkylarylgruppe substituierten $C_2$-$C_6$-Alkenylrest darstellt;

(b) gegebenenfalls aus mindestens einem Liganden, der ausgewählt ist anorganischen Alkalimetallsalzen, nichtstickstoffhaltigen makrocyclischen Komplexbildnern und organischen Alkalimetallverbindungen, in denen das Alkalimetall mit einer Gruppe der Formel $B(R^2)_4$ verbunden ist, wobei $R^2$ ausgewählt ist aus Wasserstoff und Alkyl- und Arylresten,
was die Herstellung einer aktiven, an dem Ende lebenden Stelle jedes Polymerblocks $PA^-$ ermöglicht;

(B) man **in einem zweiten Verfahrensschritt** die lebenden Blöcke PA in dem Milieu, was zur Durchführung der Polymerisation auf anionischem Wege gedient hat, mit mindestens einem Monomer Mr in einem Molverhältnis von 2,5 bis 15 pro aktivem Zentrum reagieren läßt, um einen vernetzten Knoten PMr zu bilden, der 3 bis 30 % verbleibende Doppelbindung in bezug auf die anfänglich vorhandenen Doppelbindungen enthält, die aus dem Monomer Mr stammen, was die Herstellung eines lebenden sternförmigen Polymers der Formel (III) ermöglicht:

$$(P\ A)_a(PMr)^{a-} \bullet aM^+ \qquad \text{(III)}$$

(C) man **in einem dritten Verfahrensschritt**

(C1) entweder den Vorläufer des sternförmigen Polymers der Formel (III) $(P\ A)_a(PMr)^{a-} \bullet aM^+$ mit einer Menge einer Verbindung der Formel RLi, wie zuvor definiert, die die restlichen Doppelbindungen des Knotens des lebenden Polymers (III) verbrauchen kann, reagieren läßt, was die Herstellung des erwarteten multifunktionellen Starters der Formel (Ia)

$$(P\ A)_a[PMr(RLi)_p]^{(a+p)-} \bullet (a+p)M^+ \quad (Ia)$$

ermöglicht oder man
(C2) die aktiven Stellen des sternförmigen Polymers der Formel (III) $(P\ A)_a(PMr)^{a-} \bullet aM^+$ durch Reaktion mit einer Protonenquelle desaktiviert, die insbesondere aus einem Alkohol, Wasser oder einer Protonensäure besteht, was nach Abtrennung die Herstellung eines Vorläufers eines sternförmigen Polymers im desaktivierten Zustand der Formel (IV)

$$(P\ A)_a(PMr) \quad (IV)$$

ermöglicht;

(D) man **in einem vierten Verfahrensschritt,** der für den Fall durchgeführt wird, daß die Operation (C2) im dritten Verfahrensschritt durchgeführt worden ist, den desaktivierten Polymervorläufer der Formel (IV) $(P\ A)_a(PMr)$ durch Reaktion mit RLi, wie zuvor definiert, reaktiviert, so daß sich erneut aktive Stellen auf Kosten der verbleibenden Doppelbindungen des Knotens des Polymers (IV) $(PA)_a(PMr)$ bilden, was die Herstellung des erwarteten multifunktionellen Starters $(P\ A)_a[PMr(RLi)_p]^{p-} \bullet pM^+$ ermöglicht.

**9.** Verfahren nach Anspruch 8, dadurch gekennzeichnet, daß der im Verfahrensschritt (A) verwendete monofunktionelle Starter der Formel (II) ausgewählt ist aus sek.-Butyllithium, n-Butyllithium und $\alpha$-Methylstyryllithium 1,1-Diphenylhexyllithium, Diphenylmethyllithium und 1,1-Diphenyl-3-methylpentyllithium.

**10.** Verfahren nach Anspruch 8 oder 9, dadurch gekennzeichnet, daß im Verfahrensschritt (A) die molare Menge an Ligand, bezogen auf den Starter, mindestens gleich 0 ist und bis zu 50 gehen kann.

**11.** Verfahren nach einem der Ansprüche 8 bis 10, dadurch gekennzeichnet, daß man im Verfahrensschritt (C1) oder (D) die Verbindung RLi in Mengen von 0,7 bis 2 Äquivalenten in bezug auf die restlichen Doppelbindungen reagieren läßt.

**12.** Verfahren nach einem der Ansprüche 8 bis 11, dadurch gekennzeichnet, daß man die verschiedenen Verfahrensschritte bei einer Temperatur durchführt, die sich zwischen 20 °C und 100 °C befindet.

**13.** Verfahren nach einem der Ansprüche 9 bis 12, dadurch gekennzeichnet, daß man die Polymerisationen in mindestens einem apolaren Lösungsmittel durchführt, das ausgewählt ist aus Toluol, Benzol, Ethylbenzol und deren Mischungen.

**14.** Sternförmiges Polymer, dargestellt durch die Formel (V)

$$[PA]_aN[PB\text{-}PC]_r \bullet rM^+ \quad (V)$$

oder durch die Formel (Va)

$$[PA]_aN[PB - PC]_r \quad (Va)$$

entweder im lebenden (reaktionsfähigen) Zustand oder im desaktivierten Zustand,
wobei in den Formeln:

- PA dieselbe Bedeutung wie in Anspruch 1 hat;
- a wie in Anspruch 1 definiert ist;
- PB einen Polymerblock darstellt, der aus mindestens einem Monomer B stammt, das ausgewählt ist aus vinylaromatischen Monomeren und Dienmonomeren, wobei PB einen Block der Polymerverzweigung der zweiten Generation darstellt;
- PC, falls vorhanden, einen Polymerblock darstellt, der aus mindestens einem Monomer C stammt, das von B

verschieden ist und ausgewählt ist aus vinylaromatischen oder (meth-)acrylischen Monomeren und Vinylpyridin; und

- r die Anzahl an Verzweigungen von [PB-PC] ist und zwischen 3 und 30 liegt.

**15.** Sternförmiges Polymer nach Anspruch 14, dadurch gekennzeichnet, daß der Block PB und der Block PC jeweils eine gewichtsmittlere Molekularmasse von 1.000 bis 200.000 aufweisen.

**16.** Sternförmiges Polymer nach Anspruch 14 und 15, dadurch gekennzeichnet, daß es eine gewichtsmittlere Molekularmasse zwischen 10.000 und 2.000.000 aufweist.

**17.** Sternförmiges Polymer nach einem der Ansprüche 14 bis 16, dadurch gekennzeichnet, daß der Block PB ein Poly-1,4-cis-butadien- oder ein Polyisopren-Block ist und der Block PC, falls vorhanden, ein Poly(esteracryl)- oder Poly (estermethacryl)-Block ist.

**18.** Verfahren zur Herstellung eines sternförmigen Polymers nach einem der Ansprüche 14 bis 17, dadurch gekennzeichnet, daß man eine anionische Polymerisation mindestens eines Monomers B, wie in Anspruch 14 definiert, mit Hilfe eines multifunktionellen Startersystems der Formel (I) $(P\ A)_a N^{n-}\ nM^+$ und gegebenenfalls mindestens eines Liganden durchführt, der ausgewählt ist aus den zuvor angegebenen, wobei die Polymerisation in einem apolaren Milieu durchgeführt wird, welches zur Herstellung dieses multifunktionellen Starters gedient hat, was die Herstellung eines lebenden sternförmigen Polymers mit Verzweigungen der zweiten Generation ermöglicht; und
man gegebenenfalls dieses so erhaltene, lebende sternförmige Polymer mit mindestens einem Monomer C, gegebenenfalls in Gegenwart eines wie zuvor definierten Liganden, reagieren läßt, was die Herstellung eines lebenden sternförmigen Polymers mit Verzweigungen PB-PC ermöglicht, wobei PC die endständigen Blöcke darstellt, und, um das erwartete sternförmige Polymer im desaktivierten Zustand herzustellen, man die endständigen aktiven Stellen der Verzweigungen durch Reaktion mit einer Protonenquelle desaktiviert, die insbesondere aus Alkohol, Wasser oder einer Protonensäure besteht; und
man gegebenenfalls anschließend eine Umesterung oder eine Hydrolyse des erhaltenen sternförmigen Copolymers in saurem Milieu durchführt.

**19.** Verfahren nach Anspruch 18, dadurch gekennzeichnet, daß man die Polymerisation eines konjugierten Diens oder eines vinylaromatischen Monomers bei Temperaturen zwischen 0 °C und 100 °C und die Polymerisation eines (Meth-)Acrylmonomers bei Temperaturen zwischen -50 °C und +60 °C durchführt.

**20.** Verfahren nach Anspruch 17 oder 18, dadurch gekennzeichnet, daß man die Polymerisation eines konjugierten Diens oder eines vinylaromatischen Diens 0,5 bis 24 Stunden lang und die Polymerisation eines (Meth-)-acrylmonomers 1 Sekunde bis 1 Stunde lang durchführt.

**21.** Verwendung der thermoplastischen, elastomeren sternförmigen Copolymere nach einem der Ansprüche 14 bis 17 zur Herstellung von Produkten, die durch Extrusion oder Spritzung geformt werden, von druckempfindlichen Klebstoffen sowie von Reagenzien zur Verbesserung der Schlagfestigkeit und Temperaturbeständigkeit von Polymeren des Methylmethacrylats, des Polystyrols, des Polyvinylchlorids und des Polycarbonats.